# FASCICULE DE BREVET EUROPEEN

(11) **EP 1 106 293 B1**
(45) Date de publication et mention de la délivrance du brevet: **02.05.2003**
(21) Numéro de dépôt: 99124586.1
(22) Date de dépôt: 09.12.1999
(51) Int. Cl.: B23H 7/08

(54) **Electrode pour l'usinage d'une pièce par électroérosion et son procédé de fabrication**
Drahtelektrode zum Funkenerodieren und Verfahren zur Herstellung
Electrode for wire electric discharge machining, and manufacturing method thereof

(43) Date de publication de la demande: 13.06.2001
(73) Titulaire: CHARMILLES TECHNOLOGIES S.A., 1217 Meyrin 1 (CH)
(72) Inventeur: Chiriotti,Nicolas, 1203 Geneve (CH); Perez Pinaya,Roberto, 1205 Geneve (CH); Fluekiger,René, 1228 Plan-Les-Ouates (CH)
(74) Mandataire: Micheli & Cie

(56) Documents cités:
- EP-A- 0 800 886
- EP-A- 0 955 396
- PATENT ABSTRACTS OF JAPAN vol. 008, no. 251 (C-252), 16 novembre 1984 (1984-11-16) -& JP 59 129744 A (INOUE JAPAX KENKYUSHO KK), 26 juillet 1984 (1984-07-26)
- PATENT ABSTRACTS OF JAPAN vol. 013, no. 282 (M-843), 28 juin 1989 (1989-06-28) -& JP 01 078724 A (FANUC LTD), 24 mars 1989 (1989-03-24)

## Description

La présente invention concerne une électrode en forme de fil ou de tige pour l'usinage d'une pièce par électroérosion comportant une âme métallique et un revêtement constitué par au moins un autre métal.

Une telle électrode est décrite dans le document JP 01 078 724 A. Elle comprend une âme en laiton et un revêtement de manganèse pur d'une épaisseur d'environ 1 µm. Cette électrode permet d'obtenir un usinage de finition précis. Lors de l'usinage en ébauche le revêtement est destiné à être éliminé complètement de la surface du fil et ne participe donc pas à une amélioration des performances d'usinage. Lorsqu'on tente d'obtenir des épaisseurs plus grandes de la couche de manganèse, cette dernière confère au fil une trop grande rigidité et dureté, ce qui pose des problèmes lors de la fabrication du fil et empêche un bon tréfilage du fil. En outre, considérant que le manganèse déposé par électrolyse est dans une phase métastable, son état de surface se dégrade et son adhérence à l'âme diminue dans le temps.

La présente invention a pour but de remédier à ces inconvénients, et l'invention est caractérisée à cet effet par le fait que le revêtement est constitué par au moins un dépôt d'un alliage comprenant du manganèse et au moins un second métal choisi parmi le groupe de métaux comprenant le Zn, Co, Cu, Ag, Fe, Mo, Ni, Se, Sn, W, le dépôt présentant une proportion de manganèse comprise entre 5 et 85% poids et une épaisseur supérieure à 1 micromètre.

Ce second métal, en particulier le Zinc, permet d'obtenir un fil dont la couche extérieure est beaucoup plus facilement déformable. On peut ainsi réaliser et tréfiler des fils dont la couche extérieure est de plusieurs dizaines de micromètres d'épaisseur. Cette couche n'est alors pas éliminée lors de l'usinage en ébauche, mais permettra un accroissement considérable des performances de l'usinage en ébauche. L'alliage obtenu permet en outre de stabiliser la couche ainsi formée qui n'est par conséquent plus sujette à la dégradation subie par le manganèse pur au cours du temps. L'invention permet également d'augmenter la tension de rupture du fil recouvert du fait de la présence du manganèse dans l'alliage. Les fils électrodes ainsi obtenus peuvent être tendus plus fortement lors de l'usinage et permettent par conséquent d'obtenir une meilleure géométrie sur la pièce découpée et de retarder la rupture du fil en usinage.

Selon un mode d'exécution préféré, ledit dépôt est constitué par un alliage binaire de manganèse et de zinc, la proportion de manganèse étant comprise entre 5 et 85 %, avantageusement entre 10 et 60 % et de préférence entre 15 et 40 % poids.

Cet alliage du revêtement permet des caractéristiques particulièrement favorables des performances d'usinage, de déformabilité, de résistance à la traction et de stabilité dans le temps.

Avantageusement l'âme présente une structure concentrique avec un centre en cuivre et une couche périphérique en laiton supportant ledit dépôt

Ces caractéristiques permettent des vitesses d'usinage très élevées.

L'invention concerne également un procédé de fabrication d'une électrode d'électroérosion et elle est caractérisée à cet effet par le fait que l'on traite un fil ou une tige formant ladite âme dans un bain électrolytique agencé de façon à produire une déposition simultanée de manganèse et d'au moins un second métal choisi parmi le groupe comprenant le Zn, Co, Cu, Ag, Fe, Mo, Ni, Se, Sn, W. Ce procédé par codéposition électrolytique permet une fabrication rapide, précise et à un prix de revient modéré.

De façon favorable, le bain électrolytique est agencé de façon à produire une déposition simultanée de manganèse et de zinc présentant une proportion de manganèse comprise entre 5 et 85 % poids, la durée de traitement étant déterminé de façon à obtenir une couche de dépôt électrolytique supérieure à 1 micromètre.

Avantageusement, ledit bain électrolytique est une solution aqueuse ayant le composition suivante :
- sulfate de manganèse mono-hydraté dans des concentrations situées entre 20 et 120 g/l, avantageusement 30 g/l ;
- sulfate de zinc hepta-hydraté dans des concentrations entre 15 et 80 g/l, avantageusement 65 g/l ;
- citrate de sodium bi-hydraté dans des concentrations entre 60 et 300 g/l, avantageusement 170 g/l.

Par ces caractéristiques on obtient un revêtement très régulier et stable, tout en permettant un prix de revient modéré.

D'autres avantages ressortent des caractéristiques exprimées dans les revendications dépendantes et de la description exposant ci-après l'invention plus en détail à l'aide de dessins qui représentent schématiquement et à titre d'exemple un mode d'exécution.

La figure 1 représente une coupe à travers une électrode conformément à l'invention.

La figure 2 illustre une installation pour la mise en oeuvre d'un procédé de fabrication de cette électrode.

La figure 3 représente un tableau comparatif des vitesses d'usinage normalisées pour un régime d'ébauche.

La figure 4 illustre un diagramme montrant la vitesse d'usinage normalisée pour un régime d'ébauche en fonction de la concentration en % poids de manganèse dans l'alliage ZnMn.

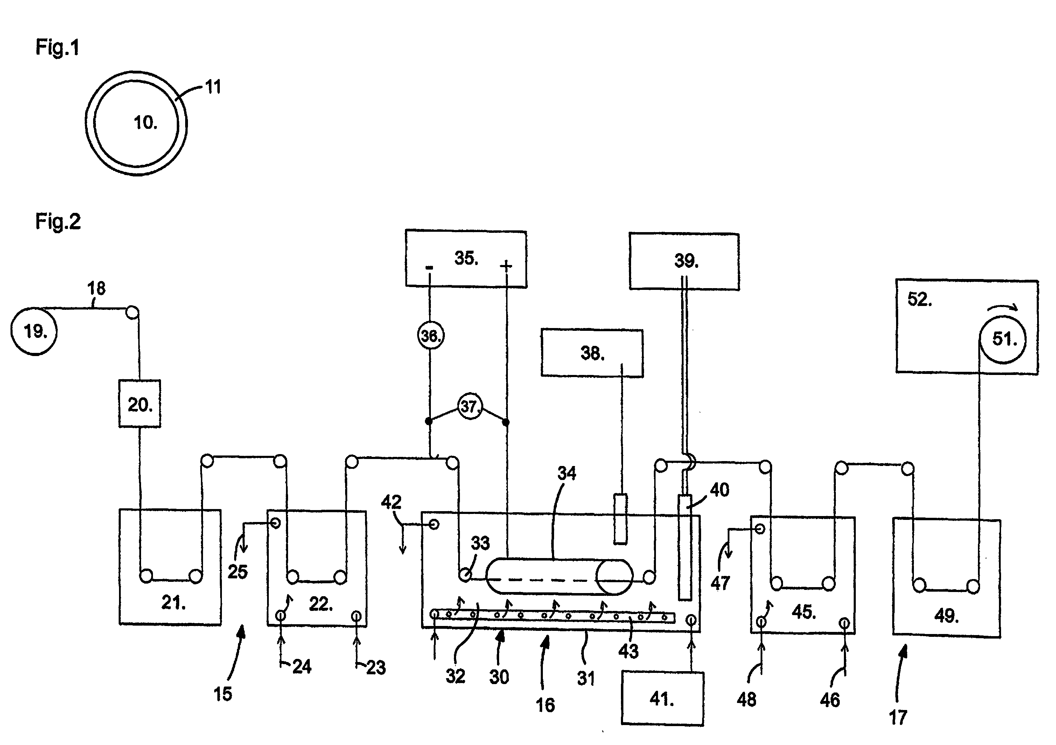

L'électrode selon un mode d'exécution de la présente invention se présente sous forme d'un fil pour le découpage d'une pièce métallique par étincelage érosif ou électroérosion, tel que illustré à la figure 1. Ce fil comprend une âme métallique 10 et un revêtement 11 constitué par un dépôt électrolytique d'un alliage.

L'âme métallique peut par exemple être constituée par du laiton, par du cuivre, par un alliage de cuivre et de manganèse ou par du fer. En outre, cette âme peut être recouverte d'une couche de zinc supportant le revêtement 11. La couche de zinc aura alors typiquement une épaisseur de quelques micromètres, par exemple 5 µm. L'âme 10 peut aussi présenter une structure concentrique avec un centre en cuivre et une couche périphérique en laiton. Cette âme est obtenue en recouvrant un centre en cuivre d'une couche de zinc et en effectuant un traitement thermique pour obtenir une diffusion thermique telle qu'il en résulte un centre en cuivre et une couche de surface en laiton.

Le revêtement 11 est constitué par un dépôt électrolytique d'un alliage binaire de manganèse et de zinc obtenu par co-déposition, à savoir déposition électrolytique simultanée. La proportion de manganèse dans l'alliage obtenu est comprise entre 5 et 85 %, avantageusement entre 10 et 60 % et de préférence entre 15 et 40 % poids. Le zinc pourra également être remplacé partiellement ou entièrement par d'autres métaux comme cela sera décrit plus loin.

Une proportion de sensiblement 20 % poids de manganèse dans cet alliage binaire est très favorable du fait de la facilité du dépôt électrolytique, de la déformabilité du fil obtenu et surtout des excellentes performances d'électroérosion.

Le revêtement 11 en alliage ZnMn permet d'obtenir des augmentations de la vitesse d'électro-usinage typiquement comprises entre 14 % et 32 % selon l'âme 10 du fil. Les performances d'usinage dépendent bien entendu également de la constitution de cette âme.

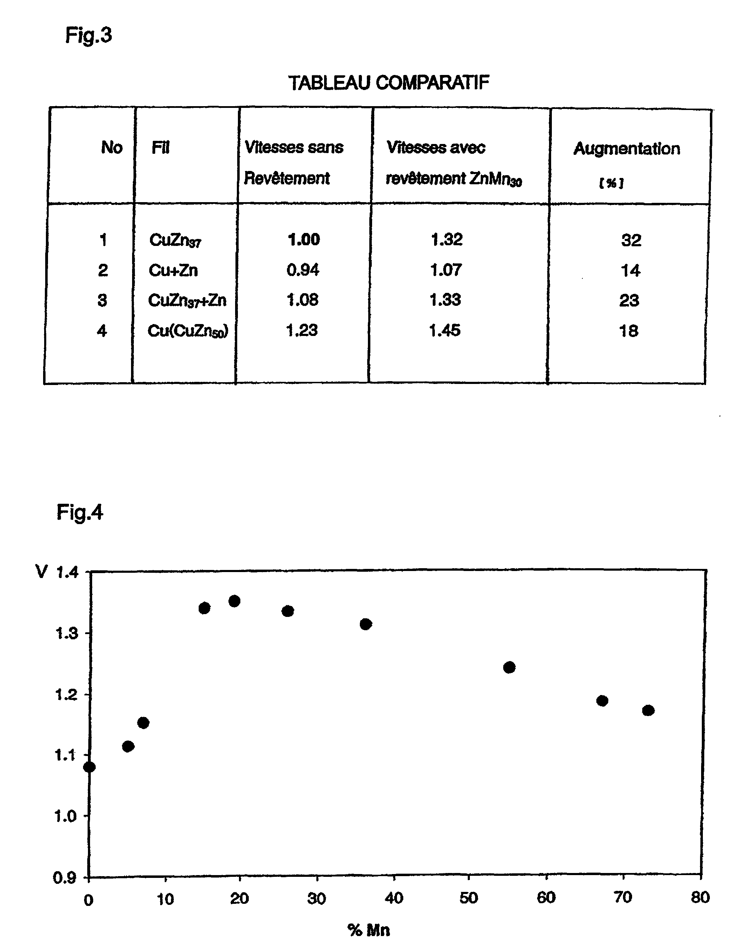

Le tableau de la figure 3 présente des mesures comparatives des vitesses de découpe dans l'acier pour un régime d'ébauche.

Les vitesses sont normalisées par rapport à un fil de laiton standard CuZn₃₇ d'un diamètre de 0,25 mm, pour lequel la vitesse est fixée à 1,00.

Dans la première colonne figurent les numéros de l'expérience. La seconde colonne indique le fil ou l'âme du fil utilisé, qui sont :
- dans l'expérience 1 du laiton CuZn₃₇,
- dans l'expérience 2 du cuivre avec une couche de 5µm de Zn,
- dans l'expérience 3 du laiton CuZn₃₇ avec une couche de 5 µm de Zn, et
- dans l'expérience 4 du cuivre avec une couche de surface en laiton CuZn₅₀ obtenu par diffusion thermique entre le cuivre et une couche de zinc.

Il est à relever que le fil No 4 Cu (CuZn₅₀) était avant la présente invention le fil le plus performant disponible. Le dépôt d'une couche de zinc pur de 5 µm sur cette âme suivi d'un tréfilage à 0,25 mm n'apporte pas d'augmentation de la vitesse de découpe en ébauche contrairement à la déposition d'une couche d'alliage binaire zinc-manganèse.

Dans les colonnes 3, respectivement 4 sont présentées les vitesses en régime d'ébauche normalisées sans revêtement selon la présente invention, respectivement avec un revêtement de ZnMn₃₀ d'une épaisseur de 5 µm.

Tous les fils sont tréfilés à un diamètre standard de 0,25 mm.

Dans la dernière colonne figurent les valeurs de l'augmentation de vitesse en pourcent obtenue grâce à un revêtement d'un alliage ZnMn₃₀ selon la présente invention. Cette concentration de ZnMn₃₀ a été choisie de manière indicative, mais ne représente pas forcément la concentration optimale au point de vue des performances.

Ces mesures comparatives démontrent que les meilleures performances sont obtenues avec une âme de fil No 4 recouvert d'un revêtement d'alliage binaire ZnMn.

L'augmentation de vitesse la plus grande de 32 % est obtenue avec une âme de fil en laiton CuZn₃₇.

Par rapport au fil décrit dans le document JP 01078724 qui est composé d'une âme recouverte d'une couche de Mn d'une épaisseur maximale de 1 µm, te revêtement obtenu par déposition simultanée de zinc et de manganèse selon la présente invention permet d'obtenir un fil dont la couche extérieure est beaucoup plus facilement déformable. On peut ainsi fabriquer et tréfiler des fils dont la couche extérieure de ZnMn est bien supérieure à 1 µm jusqu'à plusieurs dizaines de micromètres d'épaisseur, par exemple de 2 à 40 µm, avantageusement de 3 à 15µm. En plus, les concentrations en zinc et en manganèse de l'alliage du revêtement 11 peuvent être variées en fonction des propriétés désirés.

Ces avantages n'étaient pas possible avec le fil décrit dans le document japonais précité, car le manganèse est un matériau de grande dureté. Le dépôt d'une couche plus épaisse qu'un micromètre pose des problèmes lors de la déformation, en particulier lors du tréfilage.

En outre, le manganèse pur déposé à l'extérieur de l'âme du fil, tel que décrit dans le document japonais, est principalement un métal dans une phase métastable. Sa qualité évolue donc dans le temps, son état de surface se dégrade et son adhérence à l'âme diminue. Ces inconvénients sont éliminés par la présente invention, car la présence du zinc déposé simultanément avec le manganèse permet de stabiliser l'alliage ainsi formé qui n'est par conséquent plus sujet à la dégradation subie par le manganèse pur au cours du temps.

La présente invention est principalement adaptée à un usinage avec un revêtement 11 d'une épaisseur supérieure à 1 µm, particulièrement utile lors de l'usinage en ébauche. Au contraire le revêtement en manganèse du document japonais précité a été développé pour effectuer un usinage de finition avec une couche fine d'environ un micron de manganèse. Cette couche peut alors résister à un usinage de finition, elle est cependant détruite et éliminée lors d'un usinage en ébauche. La couche de manganèse décrite dans le document japonais ne peut donc pas intervenir dans les performances d'un usinage en ébauche.

Par rapport aux fils conventionnels, le revêtement en alliage ZnMn permet d'augmenter significativement la tension de rupture du fil. Les fils selon la présente invention pourront donc être tendus plus fortement lors de l'usinage et permettront par conséquent d'obtenir une meilleure géométrie de la pièce découpée et de retarder la rupture du fil en usinage.

Les vitesses d'usinage normalisées par rapport à un fil de laiton standard CuZn₃₇ d'un diamètre de 0,25 mm, pour lequel la vitesse est fixée à 1,00 ont été déterminées expérimentalement pour des fils ayant une âme 10 de laiton CuZn₃₇ avec un revêtement 11 de ZnMn comportant différentes concentrations en manganèse. Les résultats sont reportés dans le diagramme de la figure 4 illustrant ces vitesses d'usinage normalisées en ébauche v en fonction de la concentration de manganèse en pourcent poids. On remarque une valeur maximale autour de 20 % de manganèse, une zone optimale entre 15 % et 40 %, une zone très favorable entre 10 % et 60 % et une zone encore bien avantageuse entre 5 % et 85 %.

Il est également à relever que des revêtements sans manganèse ou des revêtements avec des teneurs en manganèse très élevées donnent naissance à des vitesses d'usinage plus faibles et qu'il existe une valeur maximale vers 20 % de manganèse. Un tel résultat est tout à fait étonnant et imprévisible, mais permet un progrès technique indéniable.

Selon une variante, un ou plusieurs autres métaux choisis parmi le groupe de métaux comprenant le Cu, Ag, Sn, Ni, Co, pourront être ajoutés à l'alliage de base ZnMn selon des concentrations prédéterminées évaluées expérimentalement.

Selon d'autres variantes, le zinc du revêtement 11 pourrait être remplacé par un ou plusieurs métaux de substitution choisis parmi le groupe de métaux comprenant le Co, Cu, Ag, Fe, Mo, Ni, Se, Sn, W.

Le procédé de fabrication du fil selon l'invention est décrit ci-après en référence à la figure 2. Ce procédé comprend des pré-traitements 15 du fil formant l'âme 10, le dépôt 16 du revêtement 11 en alliage ZnMn et des post-traitements 17.

Le fil 18 constituant l'âme 10 est déroulé d'une bobine débitrice 19 pour arriver dans la zone des pré-traitements 15, qui sont nécessaires pour la préparation de la surface de l'âme 10 avant de réaliser la co-déposition électrolytique de l'alliage ZnMn. Le premier pré-traitement consiste à dégraisser la surface du fil dans une cellule de dégraissage 20 avec des solvants, tels que l'acétone, le chlorure de méthylène, etc. Ce dégraissage est suivi d'une attaque à l'acide dans un bain acide 21 pour enlever des formations d'oxyde. Pour les fils en cuivre ou en alliage de cuivre, on utilise avantageusement une solution d'acide sulfurique à température ambiante.

La concentration de la solution d'acide est comprise entre 5 et 30 % poids et favorablement 20 % poids. Si l'on désire accélérer le processus de désoxydation, on chauffe le bain à 80° C. En fonction de la concentration et de la température, le temps d'attaque peut varier entre 1 et 10 minutes. Le pré-traitement est achevé par un rinçage dans un bac 22 comportant une amenée d'eau 23, une conduite d'air d'agitation 24 et une sortie d'eau 25.

Le dépôt de l'alliage ZnMn se réalise par co-déposition dans une installation d'électrolyse 30 comportant un bac 31, par exemple en verre Pyrex d'un diamètre de 100 mm contenant la solution d'électrolyse ou l'électrolyte 32. Les poulies de soutien 33 du fil dans le bain sont de préférence en teflon®.

Une anode 34 est suspendue dans le bac 31 et constituée en zinc ou en acier inoxydable, ou encore en titane ou niobium avec un revêtement en platine. Par exemple, l'anode peut être formée par un fil de zinc pur bobiné pour obtenir une bobine d'un diamètre de 20 mm, dans laquelle passe le fil 18 constituant la cathode. Un générateur réglable de courant continu 35 est relié au fil et à l'anode.

Un ampèremètre 36 et un voltmètre 37 permettent de mesurer le courant et la tension. L'installation comprend en outre un instrument de mesure du pH 38 de la solution et un élément de contrôle 39 de la température avec un organe de chauffage 40.

Une alimentation 41 en électrolyte permet de renouveler la solution dans le bac 31 qui comporte une conduite de sortie 42 pour l'électrolyte. Une agitation du bain est assurée par un tuyau 43 en cuivre nickelé dans lequel est injecté de l'azote ou de l'air.

L'électrolyte 32 est une solution aqueuse avec une composition suivante :
- sulfate de manganèse mono-hydraté, dans des concentrations comprises entre 20 et 120 g/l, avantageusement 30 g/l,
- sulfate de zinc hepta-hydraté, dans des concentrations comprises entre 15 et 80 g/l, avantageusement 65 g/l,
- citrate de sodium bi-hydraté, dans des concentrations comprises entre 60 et 300 g/l, avantageusement 170 g/l.

La température du bain est maintenue entre 20 et 60°C. Les températures élevées renforcent la stabilité du bain et permettent de diminuer le flux de renouvellement de la solution.

Pour des conditions données, la concentration en Mn du dépôt diminue lorsqu'on augmente la température du bain, il est donc nécessaire de réajuster dans ce cas les autres conditions de dépôt de façon à obtenir la composition désirée.

Le pH de la solution peut être fixée entre 3.5 et 6. Il peut être ajusté avec des solutions d'acide sulfurique et d'hydroxyde de sodium. Un pH plus grand que 5.4 favorise la stabilité du bain. En diminuant le pH de la solution on diminue la concentration de Mn des dépôts pour des conditions données.

La densité de courant peut être variée entre 2 et 50 A/dm² et peut par exemple être fixée à 10 A/dm². La concentration de Mn dans le dépôt augmente avec la densité de courant utilisée. Pour des courants élevés l'efficience du courant (current efficiency) pour réaliser le dépôt diminue. Pour obtenir une épaisseur donnée il est donc nécessaire, si l'on augmente la densité de courant, d'ajuster d'autres paramètres, par exemple la durée de déposition.

Les variables de densité de courant de dépôt, de pH de la solution, de température, et de vitesse de flux de renouvellement de la solution sont fixées en fonction de la composition d'alliage désirée.

La vitesse de déroulement du fil dans le bain définit le temps de déposition et l'épaisseur finale du dépôt. Le temps de déposition peut aussi être optimisé en fonction de la vitesse de renouvellement de la solution. En augmentant cette vitesse on augmente l'efficience du courant, mais on diminue la concentration de Mn des dépôts.

Le fil ainsi obtenu passe alors aux post-traitements, qui peuvent comporter toute une série d'opérations, commençant par un rinçage dans un bain d'eau effectué dans un bac 45 avec une conduite d'entrée 46, une conduite de sortie 47 et une amenée d'air d'agitation 48. On peut également effectuer un traitement à l'acide dans une solution diluée d'acide nitrique à 0,25 - 0,5 % contenue dans un bac similaire. Suivent ensuite toute une série d'autres post-traitements 49, tels que des passivations, des traitements thermiques, des tréfilages et des traitements de surface.

Des passivations de la surface des revêtements des fils sont conseillées si l'on veut renforcer leur résistance contre l'usure ou la corrosion dans différents milieux. Des procédés de passivation que l'on peut utiliser dans le cas présent sont la chromisation et la phosphatation.

Pour la chromisation une méthode économique et efficace consiste à utiliser, par exemple, des solutions aqueuses contenant 3 g/l d'acide chromique et 5 g/l de chlorure de sodium. Des immersions du fil dans ce bain pendant 5 à 30 secondes sont suffisantes pour former, à la surface des revêtements, des films protecteurs très minces, contenant du chrome hexa- et trivalent ainsi que des oxydes des matériaux de base. Ce traitement est suivi d'un séchage à l'air chaud avant le bobinage final. Au cas où le fil doit être réduit en diamètre par tréfilage, celui-ci doit être effectué avant la chromisation.

La phosphatation présente des avantages tant pour la protection contre la corrosion que pour la déformation à froid du fil. Ce procédé peut donc être réalisé avant le tréfilage. Il peut s'effectuer, par exemple, par immersion du fil dans une solution d'acide phosphorique. Ce traitement produit une fine couche de phosphates des matériaux de base du revêtement à la surface de celui-ci. Ces composés rendent moins active la surface du revêtement et servent, à cause de leur structure en plaquettes, fibres et autres formes orientées, comme lubrifiants pour faciliter le tréfilage.

Les traitements thermiques éventuels interviennent de préférence après la passivation et le dispositif peut à cet effet consister en un four permettant d'effectuer des paliers de températures. Ce dispositif peut aussi prendre la forme de deux contacts éloignés d'une certaine distance et permettant de faire circuler un courant électrique dans le fil pour le chauffer par effet joule. Les traitements thermiques permettent de faire diffuser les métaux déposés à la surface du fil.

Le diamètre du fil 18 est réduit dans un dispositif de tréfilage comportant une ou plusieurs filières suivant le diamètre final à obtenir.

Les traitements de surface interviennent avant ou après le tréfilage et peuvent par exemple comporter une oxydation superficielle effectuée dans un dispositif chauffant contenant une atmosphère riche en oxygène et/ou une anodisation de la surface.

Au moyen de l'anodisation, des couches d'oxyde peuvent être réalisées sur les dépôts des fils. Le procédé d'anodisation peut être effectué dans un dispositif d'électrolyse avec le fil à oxyder utilisé comme anode. Dans ce cas, l'électrolyte est constitué d'une solution d'acide oxalique, dans des concentrations situées entre 50 et 100 g/l, de préférence 75 g/l.

Des matériaux pour la cathode peuvent être l'aluminium, l'acier inoxydable ou le graphite. Le procédé se réalise à température ambiante.

L'épaisseur de la couche dépend de la tension appliquée entre l'anode et la cathode. Celle-ci dépend à son tour des conditions de la surface du dépôt Si celui-ci a été passivé par phosphatation ou chromisation ou oxydé au préalable par des traitements thermiques ou chimiques, les tensions nécessaires pour obtenir une épaisseur donnée sont plus grandes que si le dépôt n'a pas été traité, du fait de la résistance accrue de la surface due au traitement préalable. Pour ces types d'anodisation on peut utiliser des tensions entre 5 et 60 V. Pour les fils non traités cette tension se situe entre 0.1 et 3 V.

En fonction de la vitesse de déroulement du fil, on obtient des courants différents d'anodisation et des caractéristiques différentes pour les oxydes anodiques. Cette vitesse peut être réglée de façon à réaliser des temps d'anodisation entre 1 et 30 secondes. Des temps d'anodisation de l'ordre de 2-5 secondes sont utilisés préférentiellement Ces conditions produisent des courants moyens entre 10 et 200 mA/cm². Les épaisseurs des oxydes anodiques obtenus sont typiquement situées entre 0.1 et 2 µm.

Après les différentes opérations de post-traitements, le fil est enroulé après dégraissage sur une bobine réceptrice 51 avec une vitesse contrôlée par un dispositif d'entraînement commandé 52. Dans un mode d'exécution favorable, l'épaisseur finale du revêtement 11 en alliage ZnMn est typiquement de 8 µm.

Il est bien entendu que le mode de réalisation décrit ci-dessus ne présente aucun caractère limitatif et qu'il peut recevoir toutes modifications désirables à l'intérieur du cadre tel que défini par la revendication 1. En particulier, l'électrode pourra présenter une autre forme qu'un fil, par exemple une forme de tige destinée à un usage dans une installation d'électroérosion par enfonçage.

L'âme 10 de l'électrode pourrait avoir une autre composition que celle indiquée précédemment, par exemple en fer ou alliage de fer. Cette âme 10 de l'électrode pourra elle-même être constituée par plusieurs couches superposées, par exemple en Fe, Cu, Zn.

Le revêtement 11 pourra également présenter deux ou plusieurs dépôts de zinc-manganèse de composition identique ou différente. Ces dépôts pourront être séparés par des couches intermédiaires ou se trouver en contact direct Le revêtement 11 pourra également être muni d'une couche périphérique extérieure, par exemple en zinc ou en étain.

Les caractéristiques de l'installation de fabrication pourront être adaptées à des électrodes présentant une autre forme ou une autre composition de revêtement. Ainsi, la composition de la solution électrolytique pourra être modifiée pour produire des revêtements 11 comportant un alliage de manganèse avec un autre second métal choisi parmi le groupe de métaux comprenant le Co, Cu, Ag, Fe, Mo, Ni, Se, Sn, W.

La composition de la solution électrolytique pourra également être choisie de façon à réaliser un revêtement de zinc et manganèse contenant une concentration prédéterminée d'un ou plusieurs autres métaux choisis parmi le groupe de métaux comprenant le Cu, Ag, Sn, Ni, Co.

Les conditions physico-chimiques du bain électrolytique pourront être adaptées à la formation plus ou moins rapide d'une couche d'alliage.

Le procédé de production du revêtement 11 pourrait également être d'un type différent, par exemple en effectuant successivement des couches superposées de zinc et de manganèse dans des bains électrolytiques séparés et en soumettant ensuite l'électrode à un traitement thermique, tel qu'il en résulte une couche de ZnMn par diffusion thermique.

Au lieu de déposer le revêtement par un procédé de galvanisation, d'autres types de dépositions simultanées ou successives peuvent être envisagées, telles que des dépositions en phase gazeuse simultanées ou successives avec traitement thermique adéquat.

## Revendications

1. Electrode en forme de fil ou de tige pour l'usinage d'une pièce par électroérosion, comportant une âme métallique (10) et un revêtement (11) constitué par au moins un autre métal, **caractérisée par le fait que** le revêtement (11) est constitué par au moins un dépôt d'un alliage comprenant du manganèse et au moins un second métal choisi parmi le groupe de métaux comprenant le Zn, Co, Cu, Ag, Fe, Mo, Ni, Se, Sn, W, le dépôt présentant une proportion de manganèse comprise entre 5 et 85 % poids et une épaisseur supérieure à 1 micromètre.

2. Electrode selon la revendication 1, **caractérisée par le fait que** ledit dépôt est constitué par un alliage binaire de manganèse et de zinc, la proportion de manganèse étant comprise entre 5 et 85 %, avantageusement entre 10 et 60 % et de préférence entre 15 et 40 % poids.

3. Electrode selon la revendication 1 ou 2, **caractérisée par le fait que** ledit dépôt est un dépôt électrolytique.

4. Electrode selon la revendication 2, **caractérisée par le fait que** le dépôt est constitué d'un alliage de manganèse et zinc contenant une concentration prédéterminée d'un ou plusieurs autres métaux choisis parmi le groupe de métaux comprenant le Cu, Ag, Sn, Ni, Co.

5. Electrode selon la revendication 1, **caractérisée en ce que** l'âme (10) présente une structure concentrique avec un centre en cuivre et une couche périphérique en laiton supportant ledit dépôt.

6. Electrode selon la revendication 1, **caractérisée en ce que** l'âme (10) est constituée soit par du laiton, par du cuivre, par un alliage de cuivre et de manganèse ou par du fer, soit par au moins deux couches de ces matériaux.

7. Electrode selon la revendication 5 ou 6, **caractérisée en ce que** l'âme (10) est recouverte d'une couche de zinc supportant ledit dépôt d'alliage.

8. Electrode selon la revendication 1, **caractérisée par le fait que** ladite épaisseur est comprise entre 2 et 40 micromètres, de préférence entre 3 et 15 micromètres.

9. Procédé de fabrication d'une électrode en forme de fil ou de tige selon la revendication 1, **caractérisé par le fait que** l'on traite un fil (18) ou une tige formant ladite âme métallique (10) dans un bain électrolytique (32) agencé de façon à produire une déposition simultanée de manganèse et d'au moins un second métal choisi parmi le groupe comprenant le Zn, Co,Cu, Ag, Fe, Mo, Ni, Se, Sn, W.

10. Procédé selon la revendication 9, **caractérisé par le fait que** le bain électrolytique (32) est agencé de façon à produire une déposition simultanée de manganèse et de zinc présentant une proportion de manganèse comprise entre 5 et 85 % poids, la durée de traitement étant déterminée de façon à obtenir une couche de dépôt électrolytique supérieure à 1 micromètre.

11. Procédé selon la revendication 10, **caractérisé par le fait que** ledit bain électrolytique (32) est une solution aqueuse ayant la composition suivante :
- sulfate de manganèse mono-hydraté, dans des concentrations situées entre 20 et 120 g/l, avantageusement 30 g/l,
- sulfate de zinc hepta-hydraté, dans des concentrations entre 15 et 80 g/l avantageusement 65 g/l,
- citrate de sodium bi-hydraté, dans des concentrations entre 60 et 300 g/l avantageusement 170 g/l.

12. Procédé selon l'une des revendications 9 à 11, **caractérisé par le fait que** l'on effectue avant l'électrolyse des pré-traitements (15) de l'électrode en dégraissant sa surface avec des solvants (20), et en effectuant une attaque à l'acide (21) pour enlever des formations d'oxydes.

13. Procédé selon l'une des revendications 9 à 12, **caractérisé par le fait que** l'on effectue après l'électrolyse des post-traitements (17) de l'électrode, tels que des immersions dans des solutions diluées d'acide (45), des passivations (49) par chromisation ou par phosphatation, un tréfilage, des traitements thermiques, des traitements de surface, et/ou le dépôt d'une couche périphérique supplémentaire.

## Patentansprüche

1. Elektrode in der Gestalt eines Drahtes oder Stabes für die Elektroerosionsbearbeitung eines Werkstückes, eine metallische Seele (10) und einen Überzug (11), der aus zumindest einem weiteren Metall besteht, umfassend, **dadurch gekennzeichnet, dass** der Überzug aus zumindest einem Niederschlag einer Legierung besteht, die Mangan und zumindest ein zweites Metall umfasst, das aus der Gruppe von Metallen ausgewählt ist, die Zn, Co, Cu, Ag, Fe, Mo, Ni, Se, Sn und W umfasst, wobei der Niederschlag einen Mangananteil zwischen 5 und 85 Gewichtsprozent und eine Dicke von mehr als einem Mikrometer aufweist.

2. Elektrode gemäss Anspruch 1, **dadurch gekennzeichnet, dass** der Niederschlag aus einer binären Legierung von Mangan und Zink besteht, wobei der Anteil des Mangans zwischen 5 und 85 Gewichtsprozent, vorteilhafterweise zwischen 10 und 60 Gewichtsprozent und bevorzugt zwischen 15 und 40 Gewichtsprozent beträgt.

3. Elektrode gemäss Anspruch 1 oder 2, **dadurch gekennzeichnet, dass** der Niederschlag ein elektrolytischer Niederschlag ist.

4. Elektrode gemäss Anspruch 2, **dadurch gekennzeichnet, dass** der Niederschlag aus einer Legierung von Mangan und Zink besteht, die eine vorbestimmte Konzentration eines oder mehrerer weiterer Metalle enthält, die aus der Gruppe von Metallen ausgewählt sind, die Cu, Ag, Sn, Ni und Co umfasst.

5. Elektrode gemäss Anspruch 1, **dadurch gekennzeichnet, dass** die Seele (10) eine konzentrische Struktur mit einem Zentrum aus Kupfer und einer Aussenschicht aus Messing, die diesen Niederschlag trägt, aufweist.

6. Elektrode gemäss Anspruch 1, **dadurch gekennzeichnet, dass** die Seele (10) entweder aus Messing, aus Kupfer, aus einer Legierung von Kupfer und Mangan oder aus Eisen oder aber aus zumindest zwei Schichten dieser Metalle besteht.

7. Elektrode gemäss Anspruch 5 oder 6, **dadurch gekennzeichnet, dass** die Seele (10) von einer Schicht aus Zink überzogen ist, die diesen Legierungsniederschlag trägt.

8. Elektrode gemäss Anspruch 1, **dadurch gekennzeichnet, dass** besagte Dicke zwischen 2 und 40 Mikrometern, bevorzugt zwischen 3 und 15 Mikrometern liegt.

9. Herstellungsverfahren für eine Elektrode in der Gestalt eines Drahtes oder Stabes gemäss Anspruch 1, **dadurch gekennzeichnet, dass** der Draht (18) oder Stab, der diese metallische Seele (10) bildet, in einem elektrolytischen Bad (32) behandelt wird, das so eingerichtet ist, eine gleichzeitige Abscheidung von Mangan und zumindest einem zweiten Metall zu liefern, das aus der Gruppe von Metallen ausgewählt ist, die Zn, Co, Cu, Ag, Fe, Mo, Ni, Se, Sn und W umfasst.

10. Verfahren gemäss Anspruch 9, **dadurch gekennzeichnet, dass** das elektrolytische Bad (32) so eingerichtet ist, eine gleichzeitige Abscheidung von Mangan und Zink zu liefern, die einen Anteil von Mangan zwischen 5 und 85 Gewichtsprozent aufweist, wobei die Länge der Behandlung so festgelegt ist, dass eine elektrolytische Niederschlagsschicht von über einem Mikrometer erhalten wird.

11. Verfahren gemäss Anspruch 10, **dadurch gekennzeichnet, dass** dieses elektrolytische Bad (32) eine wässrige Lösung ist, die die folgende Zusammensetzung hat:
- Mangansulfat-Monohydrat in Konzentrationen, die zwischen 20 und 120 g/l liegen, vorteilhaft bei 30 g/l,
- Zinksulfat-Heptahydrat in Konzentrationen zwischen 15 und 80 g/l, vorteilhaft von 65 g/l,
- Natriumcitrat-Dihydrat in Konzentrationen zwischen 60 und 300 g/l, vorteilhaft von 170 g/l.

12. Verfahren gemäss einem der Ansprüche 9 bis 11, **dadurch gekennzeichnet, dass** vor der Elektrolyse Vorbehandlungen (15) der Elektrode erfolgen, indem ihre Oberfläche mit Lösungsmitteln (20) entfettet wird und indem man einen Angriff mit Säure (21) ausführt, um Oxidbildungen zu entfernen.

13. Verfahren gemäss einem der Ansprüche 9 bis 12, **dadurch gekennzeichnet, dass** nach der Elektrolyse Nachbehandlungen (17) der Elektrode erfolgen, wie Eintauchen in verdünnte Säurelösungen (45), Passivierungen (49) durch Chromatieren oder Phosphatieren, Draht ziehen, Wärmebehandlungen, Oberflächenbehandlungen und/oder die Abscheidung einer zusätzlichen Aussenschicht.

## Claims

1. Electrode in the form of a wire or rod for machining a piece by electro-erosion, comprising a metallic core (10) and a cladding (11) constituted by at least one other metal, **characterized by** the fact that the cladding (11) is constituted by at least one deposit of an alloy comprising manganese and at least one second metal selected from the group of metals comprising Zn, Co, Cu, Ag, Fe, Mo, Ni, Se, Sn, W, the deposit having a proportion of manganese comprised between 5 and 85% by weight and a thickness greater than 1 micrometer.

2. Electrode according to claim 1, **characterized by** the fact that said deposit is constituted by a binary alloy of manganese and zinc, the proportion of manganese being comprised between 5 and 85%, preferably between 10 and 60% and more preferably between 15 and 40% by weight.

3. Electrode according to claim 1 or 2, **characterized by** the fact that said deposit is an electrolytic deposit.

4. Electrode according to claim 2, **characterized by** the fact that the deposit is constituted of a manganese and zinc alloy containing a predetermined concentration of one or several other metals selected from the group of metals comprising Cu, Ag, Sn, Ni, Co.

5. Electrode according to claim 1, **characterized in that** the core (10) has a concentric structure with a copper center and a peripheral layer of brass supporting said deposit.

6. Electrode according to claim 1, **characterized in that** the core (10) is constituted either by brass, copper, a copper and manganese alloy, or by iron, or by at least two layers of these materials.

7. Electrode according to claim 5 or 6, **characterized in that** the core (10) is covered with a layer of zinc supporting said alloyed deposit.

8. Electrode according to claim 1, **characterized by** the fact that said thickness is comprised between 2 and 40 micrometers, preferably between 3 and 15 micrometers.

9. Process for the production of an electrode in the form of a wire or rod according to claim 1, **characterized by** the fact that a wire (18) or a rod forming said metallic core (10) is treated in an electrolytic bath (32) arranged so as to produce a simultaneous deposition of manganese and at least one second metal selected from the group comprising Zn, Co, Cu, Ag, Fe, Mo, Ni, Se, Sn, W.

10. Process according to claim 9, **characterized by** the fact that the electrolytic bath (32) is so arranged to produce a simultaneous deposition of manganese and zinc having a proportion of manganese comprised between 5 and 85% by weight, the duration of treatment being determined so as to obtain a layer of electrolytic deposit thicker than 1 micrometer.

11. Process according to claim 10, **characterized by** the fact that said electrolytic bath (32) is an aqueous solution having the following composition:
- mono-hydrated manganese sulfate, in concentrations between 20 and 120 g/l, preferably 30 g/l,
- hepta-hydrated zinc sulfate, in concentrations between 15 and 80 g/l, preferably 65 g/l,
- bi-hydrated sodium citrate, in concentrations between 60 and 300 g/l, preferably 170 g/l.

12. Process according to one of claims 9 to 11, **characterized by** the fact that before electrolysis, pretreatments (15) of the electrode are carried out by degreasing its surface with solvents (20), and by carrying out an acid attack (21) in order to remove oxide formations.

13. Process according to one of claims 9 to 12, **characterized by** the fact that, after electrolysis, there are carried out post-treatments (17) of the electrode, such as immersion in dilute acid solution (45), passivation (49) by chromatization or by phosphatation, wire drawing, thermal treatments, surface treatments, and/or deposition of a supplemental peripheral layer.
